# EUROPEAN PATENT SPECIFICATION

(11) **EP 1 340 568 B1**
(45) Date of publication and mention of the grant of the patent: **16.09.2009**
(21) Application number: 01974833.4
(22) Date of filing: 12.10.2001
(51) Int. Cl.: B22F 9/00, B22F 9/12, B22F 9/30, B22F 1/02, B01F 17/16, B01F 17/22, B01F 17/28

(54) **DISPERSION OF ULTRAFINE METAL PARTICLES AND PROCESS FOR PRODUCING THE SAME**
DISPERSION VON ULTRAFEINEN METALLPARTIKELN UND HERSTELLUNGSVERFAHREN DAFÜR
DISPERSION DE PARTICULES METALLIQUES ULTRAFINES ET PROCEDE DE FABRICATION

(30) Priority: 13.10.2000 JP 2000313591
(43) Date of publication of application: 03.09.2003
(73) Proprietor: ULVAC, INC., Chigasaki-shi, Kanagawa 253-8543 (JP)
(72) Inventor: SUZUKI, Toshihiro, Sanbu-gun, Chiba 289-1226 (JP); ODA, Masaaki, Sanbu-gun, Chiba 289-1226 (JP)
(74) Representative: AMMANN PATENTANWÄLTE AG BERN
(86) International application number: PCT/JP2001/009004
(87) International publication number: WO 2002/030600

(56) References cited:
- EP-A- 1 025 937
- WO-A-97/33713
- WO-A1-97/24224
- DE-A1- 19 630 581
- JP-A- 3 034 211
- JP-A- 61 069 905
- PATENT ABSTRACTS OF JAPAN vol. 2000, no. 02, 29 February 2000 (2000-02-29) & JP 11 319538 A (NIPPON PAINT CO LTD), 24 November 1999 (1999-11-24)

## Description

### Technical Field

The present invention relates to a liquid dispersion of metal ultrafine particles and a method for the preparation of the same. This liquid dispersion of metal ultrafine particles may be used in, for instance, multilayer distributing wires of, for instance, IC substrates or the like, internal distributing wires of semiconductor devices, interlayer connections of semiconductor modules each having a laminated structure, the formation of transparent conductive films, junctions between metals and ceramics, or color filters, which make use of the colloidal color of the liquid dispersion.

In the following, the expression "metal ultrafine particles " means ultrafine particles of at least one metal or alloys or oxides of metals.

### Background Art

As methods for preparing liquid dispersions of conductive metals using metal fine particles having a particle size of not more than 100 nm, there have been known, for instance, the technique for evaporation of metals in a gas phase such as those disclosed in, for instance, Japanese Un-Examined Patent Publication (hereunder referred to as "J.P. KOKAI") No. Hei 3-34211; and the reduction-precipitation technique starting from metal salts such as those disclosed in, for instance, J.P. KOKAI No. Hei 11-319538.

WO-A-97/33173 discloses a method of preparing ultrafine (smaller than 100 nm) or fine (size from 100 nm to 1500 nm) metal particle suspensions.

A low concentrated suspension of metal particles is obtained by the evaporation of metal in a solvent atmosphere and condensing the particles in a solid solvent matrix by cooling. A suspension is obtained by warming up with vigorous stirring, and an encapsulant is added. The encapsulant is a component which is adsorbed on or covalently bound to the particles and prevents them from building larger particles. In particular, it is described:
- Isopropanol as solvent;
- Tin, lead and tin/lead as metal;
- Triethanolamine, malonic acid, mixture of triethanolamine and malonic acid, oleic acid, and 1,2,6-hexanetriol as encapsulant.

The encapsulated particles have sizes down to 67 nm. However, with encapsulants having a strong flocculating activity, e.g. ethanolamine, sizes of 680 nm have been measured.

WO-A-97/24224 discloses to reduce a metallic compound in solution in the presence of a so-called passivant which binds to the surface of the created metal particles. As a passivant, dodecylamine, C₁₈H₃₅NH₂ and thiols are used.

To form a film for fine distributing wires such as multilayer distributing wires of IC substrates and internal distributing wires of semiconductor devices, metal ultrafine particles dispersed in a liquid in a high concentration should be supplied to a desired site, while maintaining their excellent fluidized condition, without causing any aggregation between ultrafine particles. In all of the liquid dispersions according to the foregoing conventional techniques, particles are individually dispersed therein, while maintaining their good flow ability at a low concentration on the order of about 15 wt%. As the concentration thereof increases, however, they suffer from such problems that particles cause aggregation, that the components of protective layers and/or the resinous components incorporated into the dispersions are solidified even when the dispersions do not cause any aggregation and that they accordingly lose their desired flow ability. For instance, in the case of multilayer distributing wires of IC substrates or internal distributing wires of semiconductor devices, it is necessary to form a distributing wire pattern having a uniform electric conductivity and free of any defect, since these distributing wires have increasingly been finer and the frequency used in these devices and distributing wires have also considerably been increased. To this end, such a distributing wire pattern should be formed using a liquid dispersion of metal ultrafine particles having a concentration as high as possible. When using a conventional dispersion of metal ultrafine particles, however, problems arise, such as aggregation of ultrafine particles and solidification of the liquid as has been discussed above and therefore, it is difficult to obtain a distributing wire pattern having a uniform electric conductivity and free of any defect.

Accordingly, it is an object of the present invention to solve the foregoing problems associated with the conventional liquid dispersions of metal ultrafine particles and to thus provide a liquid dispersion of metal ultrafine particles, which can maintain its flow ability even at a high concentration, in which the metal ultrafine particles are free of any aggregation and which can be concentrated into a dispersion having a high concentration as well as a method for preparing such a liquid dispersion.

### Disclosure of the Invention

The inventors of this invention have conducted various studies to solve the foregoing problems associated with the conventional techniques and to develop such a technique or a liquid dispersion containing metal ultrafine particles individually dispersed in a liquid, which does not cause any aggregation and which can maintain its flow ability, at a high concentration of the particles even in the absence of any protective colloid and/or resinous components, have found that the foregoing problems can be solved by the use of a specific dispersant and a specific combination of processing steps and have thus completed the present invention on the basis of the foregoing finding.

The liquid dispersion of metal ultrafine particles according to the present invention comprises at least one member selected from the group consisting of alkylamines, carboxylic acid amides and amino-carboxylic acid salts as a dispersant and metal ultrafine particles having a particle size of not more than 100 nm and individually dispersed in a liquid. In a dispersion containing at least one member selected from the group consisting of alkylamines, carboxylic acid amides and amino-carboxylic acid salts, the metal ultrafine particles are individually and uniformly dispersed therein and the flow ability thereof can be maintained, even when increasing the concentration of the metal ultrafine particles.

The foregoing metal ultrafine particles are those prepared by any well-known technique of the evaporation of a raw metal in a gas phase (hereunder referred to as "evaporation-in-gas technique") at a pressure of not higher than 1,33 kPa (10 Torr) or those prepared according to any well-known reduction technique in a liquid phase (hereunder referred to as "liquid-phase reduction technique").

The foregoing alkylamine may be those having 4 to 20 carbon atoms in the main chain thereof and is preferably a primary amine. The content of the at least one member selected from the group consisting of alkylamines, carboxylic acid amides and amino-carboxylic acid salts in the dispersion ranges from 0.2 to 7 wt% on the basis of the mass of the metal ultrafine particles.

The method for preparing a liquid dispersion containing metal ultrafine particles according to the present invention comprises the steps of: evaporating a raw metal, according to the evaporation-in-gas technique, in a vacuum in the presence of organic solvent vapor containing at least one organic solvent used for forming ultrafine particles of the metal or in the presence of mixed vapor containing the organic solvent vapor and vapor of at least one member selected from the group consisting of alkylamines, carboxylic acid amides and amino-carboxylic acid salts as a dispersant, to thus bring the organic solvent vapor or the mixed vapor into contact with the metal vapor; and then cooling the vapor mixture to collect a liquid containing metal ultrafine particles; and further, if the metal vapor is brought into contact with only the organic solvent vapor, adding at least one member selected from the group consisting of alkylamines, carboxylic acid amides and amino-carboxylic acid salts as a dispersant to the collected liquid, to thus give a desired liquid dispersion. The use of such a process would permit the preparation of a liquid dispersion of metal ultrafine particles in which metal ultrafine particles having a particle size of not more than 100 nm are individually or separately dispersed.

In the foregoing preparation method, when the metal vapor is brought into contact with only the organic solvent vapor, solvent-substitution may be carried out by adding the at least one dispersant selected from the group consisting of alkylamines, carboxylic acid amides and amino-carboxylic acid salts and thereafter a low molecular weight polar solvent for the removal of the organic solvent to the liquid containing the metal ultrafine particles, which is collected by cooling to thus precipitate the metal ultrafine particles; removing the resulting supernatant to thus substantially remove the organic solvent; and subsequently adding at least one solvent for forming a liquid dispersion containing metal ultrafine particles individually dispersed therein to the resulting precipitated product. Moreover, when the metal vapor is brought into contact with the mixed vapor, such solvent-substitution may likewise be carried out by adding a low molecular weight polar solvent for the removal of the organic solvent to the liquid containing the metal ultrafine particles, which is collected by cooling to thus precipitate the metal ultrafine particles; then removing the resulting supernatant to thus substantially remove the organic solvent; and subsequently adding at least one solvent for forming a liquid dispersion containing metal ultrafine particles individually dispersed therein to the resulting precipitated product.

The organic solvent used for forming metal ultrafine particles according to the evaporation-in-gas technique may preferably be an organic solvent containing at least one alcohol having not less than 5 carbon atoms or an organic solvent containing at least one organic ester. In addition, the solvent for forming a liquid dispersion containing metal ultrafine particles individually dispersed therein may be a less or weakly polar solvent whose main chain has 6 to 18 carbon atoms.

After the preparation of the foregoing liquid dispersion in which metal ultrafine particles having a particle size of not more than 100 nm are individually and separately dispersed therein, the liquid dispersion can be concentrated by heating the same in a vacuum to obtain a concentrated liquid dispersion having a high metal ultrafine particle concentration of up to about 80 wt%. In this case, the metal ultrafine particles are still individually and uniformly dispersed in the liquid and the liquid still has a desired flow ability.

Alternatively, the method for preparing a liquid dispersion of metal ultrafine particles according to the present invention comprises the steps of: adding, to a raw material for reduction containing a metal, a solvent and at least one member selected from the group consisting of alkylamines, carboxylic acid amides and amino-carboxylic acid salts as a dispersant to give a starting material; decomposing the starting material by heating to form metal ultrafine particles having a particle size of not more than 100 nm, in which individual particles are coated with the dispersant; and then substituting a solvent for forming a liquid dispersion containing the metal ultrafine particles individually or separately dispersed therein for the solvent used for forming the ultrafine particles.

### Brief Description of the Drawing

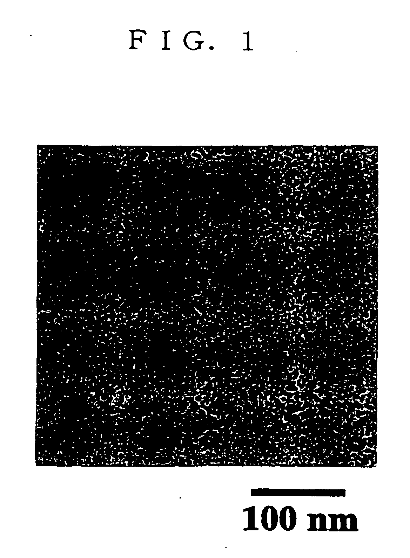

Fig. 1 is an electron micrograph showing the dispersed conditions of Au ultrafine particles present in a liquid dispersion of Au ultrafine particles according to the present invention.

### Best Mode for Carrying Out the Invention

The multilayer distributing wires of, for instance, IC substrates or internal distributing wires of semiconductor devices have recently increasingly been finer and there has been desired for the development of distributing wires on the order of not more than 1µm. For this reason, metal ultrafine particles contained in a liquid dispersion should have a particle size of not more than 1/10 time the required line or wire width, or not more than 100 nm and preferably not more than 10 nm.

As has been discussed above, the metal ultrafine particles used in the present invention are preferably those capable of being prepared by, for instance, the evaporation-in-gas technique or the chemical reduction method (such as chemical decomposition techniques in a gas or liquid phase) and these methods would permit the preparation of metal ultrafine particles having a uniform particle size on the order of not more than 100 nm. To improve the dispersion stability of such metal ultrafine particles as a raw material, there is added, thereto, at least one member selected from the group consisting of alkylamines, carboxylic acid amides and amino-carboxylic acid salts as a dispersant. The liquid dispersion of metal ultrafine particles, which contains at least one member selected from the group consisting of alkylamines, carboxylic acid amides and amino-carboxylic acid salts, would ensure the individual and uniform dispersion of these metal ultrafine particles having a particle size of not more than 100 nm in the liquid dispersion and maintain the desired flow ability, even when increasing the concentration of the ultrafine particles. The resulting liquid dispersion of metal ultrafine particles can be condensed to give a dispersion having a concentration of up to 80 wt% and the latter is still considered to be a liquid dispersion having a viscosity, as determined at room temperature, of not higher than 50 mPa·s and a desired flow ability.

When preparing a liquid dispersion using the metal ultrafine particles produced by the evaporation-in-gas technique, a metal or metals are evaporated in a vacuum chamber and in an inert gas atmosphere maintained at a pressure of not more than 10 Torr, and vapor of at least one organic solvent is introduced into the vacuum chamber during the step for cooling and collecting the resulting metal vapor, while the metal vapor grows into particles to thus bring the surface of the metal particles into contact with the vapor of the organic solvent and the liquid in which the resulting primary particles are individually and uniformly dispersed in the organic solvent in a colloidal state is used as a raw material. To the resulting colloidal liquid dispersion, there is added at least one member selected from the group consisting of alkylamines, carboxylic acid amides and amino-carboxylic acid salts, followed by admixing these components, in order to improve the dispersion stability of the metal ultrafine particles. Thereafter, the solvent-substitution is, if desired, carried out by adding a low molecular weight polar solvent to the resulting mixture to thus precipitate the metal ultrafine particles, discharging the supernatant through decantation, repeating these two steps over several times to substantially remove the organic solvent and then adding, to the resulting precipitates, at least one solvent for forming individually dispersed ultrafine particles to thus give a liquid dispersion of the metal ultrafine particles having a particle size of not more than 100 nm and individually dispersed therein. The at least one member selected from the group consisting of alkylamines, carboxylic acid amides and amino-carboxylic acid salts may be added to the liquid dispersion obtained by bringing the metal vapor into contact with the organic solvent vapor, cooling the resulting vapor mixture and collecting condensed product, as has been described above, or it may likewise be used in the evaporation step of the metal after it is admixed with the organic solvent vapor to give a mixed vapor of the organic solvent and the dispersant.

The alkylamines usable in the present invention are not restricted to specific ones, but may be, for instance, primary to tertiary amines or monoamines, diamines or triamines. In particular, preferably used herein are alkylamines each having a main skeleton of 4 to 20 carbon atoms and more preferably alkylamines each having a main skeleton of 8 to 18 carbon atoms from the viewpoint of their stability and easy handling ability. Moreover, all of the foregoing primary to tertiary alkylamines may efficiently function as dispersants, but primary alkylamines are suitably used in the present invention from the viewpoint of their stability and easy handling ability. If the main chain of the alkylamine has less than 4 carbon atoms, it has such a tendency that it shows an extremely high basicity of the amine and it may attack or corrode the metal ultrafine particles and ultimately dissolve the same. On the other hand, if the main chain of the alkylamine has more than 20 carbon atoms, the resulting liquid dispersion may have an increased viscosity and this makes the handling ability thereof slightly poor when increasing the concentration of the metal ultrafine particles present in the liquid dispersion. In addition, carbon is apt to remain in the metal film formed after firing of the dispersion applied onto an article and thus the resistivity of the resulting metal film increases.

Specific examples of alkylamines usable in the present invention are primary amines such as butylamine, octylamine, dodecylamine, hexadodecylamine, octadecyl- amine, cocoamine, tallowamine, hydrogenated tallowamine, oleylamine, laurylamine, and stearylamine; secondary amines such as di-cocoamine, dihydrogenated tallowamine and di-stearylamine; and tertiary amines such as dodecyl dimethylamine, didodecyl monomethylamine, tetradecyl dimethylamine, octadecyl dimethylamine, cocodimethylamine, dodecyltetradecyl dimethylamine, and trioctylamine; and other amines, for instance, diamines such as naphthalenediamine, stearyl propylenediamine, octamethylenediamine and nonanediamine. In addition, specific examples of carboxylic acid amides and amino-carboxylic acid salts are stearic acid amide, palmitic acid amide, lauric acid laurylamide, oleic acid amide, oleic acid diethanolamide, oleic acid laurylamide, stearanilide and oleylaminoethyl glycine. At least one member selected from the group consisting of alkylamines, carboxylic acid amides and amino-carboxylic acid salts may serve as a stable dispersant in the present invention.

According to the present invention, the content of the alkylamine in the liquid dispersion containing metal colloid ranges from about 0.1 to 10 wt% and desirably 0.2 to 7 wt% on the basis of the mass of the metal ultrafine particles. If the content thereof is less than 0.1 wt%, the metal ultrafine particles are not individually dispersed in a liquid, form aggregates and thus the liquid dispersion shows poor dispersion stability. On the other hand, if the content exceeds 10 wt%, the resulting liquid dispersion has a high viscosity and ultimately undergoes the formation of a gel-like product.

The organic solvent for forming metal ultrafine particles used in the evaporation-in-gas technique in the method of the present invention is a solvent having a relatively high boiling point so that it can easily be liquefied when cooling the vapor mixture and collecting the resulting metal ultrafine particles in the subsequent steps. Examples thereof are solvents each containing at least one member selected from the group consisting of alcohols having not less than 5 carbon atoms such as terpineol, citronellol, geraniol and phenethyl alcohol; or solvents each containing at least one member selected from the group consisting of organic esters such as benzyl acetate, ethyl stearate, methyl oleate, ethyl phenyl acetate and glycerides, which may appropriately be selected depending on the element constituting the metal ultrafine particles used or the applications of the resulting liquid dispersion.

Moreover, the solvent, which permits the dispersion of the individual metal ultrafine particles when preparing a liquid dispersion of the particles according to the present invention, is a weakly polar solvent and preferably used herein are organic solvents whose main chain has 6 to 18 carbon atoms. If the main chain has less than 6 carbon atoms, the polarity of the solvent is extremely high and it never provides a desired dispersion or it is quickly dried and this makes the handling of the resulting dispersion product difficult. On the other hand, if the carbon atom number thereof exceeds 18, the resulting dispersion has an extremely high viscosity and the resulting fired product is apt to include residual carbon. Examples of such solvents are long chain alkanes such as hexane, heptane, octane, decane, undecane, dodecane, tridecane and trimethyl pentane; cyclic alkanes such as cyclohexane, cycloheptane and cyclooctane; aromatic hydrocarbons such as benzene, toluene, xylene, trimethyl-benzene and dodecyl-benzene; and alcohols such as hexanol, heptanol, octanol, decanol, cyclohexanol and terpineol. These solvents may be used alone or in any combination. For instance, the solvent may be mineral spirit, which is a mixture of long chain alkanes.

When preparing a liquid dispersion of metal ultrafine particles, the amount of the solvent to be used may appropriately be selected depending on each particular application of the liquid dispersion. In this connection, the concentration of the metal ultrafine particles may optionally be adjusted by heating in a vacuum after the preparation of the liquid dispersion.

The metal constituting the metal ultrafine particles used in the present invention is not restricted to any particular one and may appropriately be selected while taking into consideration purposes and applications. Specific examples thereof include at least one metal selected from the group consisting of silver, gold, copper, platinum, palladium, tungsten, nickel, tantalum, indium, tin, zinc, titanium, chromium, iron, cobalt and silicon, or alloys or oxides of these metals. The foregoing at least one member selected from the group consisting of alkylamines, carboxylic acid amides and amino-carboxylic acid salts may serve as a dispersant for the metal ultrafine particles constituted by either of the foregoing elements and can provide a desired liquid dispersion of metal ultrafine particles.

Moreover, if a liquid dispersion is prepared using metal ultrafine particles formed by the chemical reduction technique such as a liquid-phase reduction technique, a desired liquid dispersion may be prepared by adding, as a dispersant, at least one member selected from the group consisting of alkylamines, carboxylic acid amides and amino-carboxylic acid salts to the metal ultrafine particles prepared according to the chemical reduction method, but a liquid dispersion can likewise be obtained by adding at least one member selected from the group consisting of alkylamines, carboxylic acid amides and amino-carboxylic acid salts to a metal-containing raw material prior to its reduction and the resulting dispersion would have a higher dispersion stability. The ingredients such as the elements constituting the metal fine particles and the at least one member selected from the group consisting of alkylamines, carboxylic acid amides and amino-carboxylic acid salts may be identical to those discussed above in connection with the evaporation-in-gas technique. In this respect, starting materials used for preparing the metal ultrafine particles may be, for instance, copper bis-hexafluoroacetylacetonate, nickel bis-acetylacetonate, and cobalt bis-acetylacetonate.

The foregoing reduction technique may, for instance, be carried out as follows:

At least one member selected from the group consisting of alkylamines, carboxylic acid amides and amino-carboxylic acid salts is added to the foregoing starting material and then the raw material is decomposed through heating to thus form metal ultrafine particles. Almost whole amount of the metal ultrafine particles thus formed are collected in the individually dispersed state. The particle size of the resulting metal ultrafine particles in the dispersion is not more than about 100 nm. One of the foregoing solvents for forming a liquid dispersion of metal ultrafine particles is substituted for the solvent present in the foregoing dispersion containing the metal ultrafine particles to give a desired dispersion. The liquid dispersion of metal ultrafine particles thus prepared can maintain its stable dispersion state even when it is concentrated by heating it in a vacuum up to a highest possible concentration of 80 wt%.

The liquid dispersion of metal ultrafine particles thus prepared according to the present invention never causes any aggregation between metal ultrafine particles and never loses its flow ability even at a high concentration on the order of 80 wt%. For instance, the viscosity, as determined at room temperature, of a liquid dispersion of metal ultrafine particles having a concentration of 80 wt% is not higher than 50 mPa•s. When this liquid dispersion containing metal ultrafine particles is used in, for instance, multilayer distributing wires used in, for instance, IC substrates or the internal distributing wires of IC, this dispersion never loses its flow ability and never causes any aggregation between metal ultrafine particles present therein and accordingly, the dispersion permits the formation of a fine distributing wire pattern free of any defect and having a uniform conductivity.

The present invention will hereunder be described in more detail with reference to the following Examples. However, these Examples are herein given simply for the illustration of the present invention and the present invention is not restricted to these specific Examples at all.

### (Example 1)

When preparing Au ultrafine particles by evaporating gold (Au) at an He gas pressure of 66.7 Pa (0.5 Torr) according to the evaporation-in-gas technique, the vapor of methyl oleate was brought into contact with Au ultrafine particles during growing, the vapor mixture was cooled to collect a liquid containing Au ultrafine particles and then laurylamine was added to the collected liquid in a rate of 0.07 g per unit gram of the Au ultrafine particles present in the liquid to thus give a liquid dispersion in which the primary Au particles were individually and uniformly dispersed in a colloidal state in the methyl oleate. The liquid dispersion, in itself, thus prepared was a liquid dispersion of metal ultrafine particles in which the Au ultrafine particles were individually dispersed. Then this liquid dispersion was diluted 10 times with acetone to thus extract the methyl oleate and to precipitate the Au ultrafine particles. Then the resulting supernatant was removed. The steps of the dilution and the removal of the supernatant were repeated three times to thus substantially remove the methyl oleate. Thereafter, mineral spirit as a solvent was added to the resulting Au ultrafine particles to give a liquid dispersion containing the Au ultrafine particles individually dispersed in the solvent.

The Au particles present in the resulting liquid dispersion had a particle size of about 8 nm and were completely separately dispersed in the solvent (see Fig. 1). This liquid dispersion was an Au ultrafine particle-containing liquid dispersion having an Au ultrafine particle content of 25 wt% and the viscosity thereof as determined at room temperature was found to be 8 mPa·s.

The liquid dispersion prepared by removing the methyl oleate as the solvent by the method described above was concentrated through heating in a vacuum to an Au ultrafine particle concentration of 80 wt%. The resulting concentrated liquid dispersion had a viscosity, as determined at room temperature, of 40 mPa·s, the Au particles had a particle size of about 8 nm and these particles were individually or separately dispersed in the solvent. In addition, the stability of the Au ultrafine particle-containing liquid dispersion was investigated by an accelerated temperature- raise test and as a result, it was found that the particles were in an individually dispersed state over not less than 2 weeks and that they were stable, when the dispersion was warmed at a temperature of 60 °C.

Then the Au ultrafine particle-containing liquid dispersion prepared by the method described above was applied, using a spin coater, onto an Si substrate provided with via holes having a diameter of 0.13µm (aspect ratio: 5) and trenches and the coated substrate was fired at 250 °C in the air. As a result, it was found that the dispersion flew into the via holes and trenches without forming any void and that the resulting metal film had a resistivity of 1.1 × 10⁻⁵ ohm·cm.

### (Example 2)

When preparing ultrafine particles of oxide of copper by evaporating copper in an He gas atmosphere containing 10% air under a pressure of 0.5 Torr according to the evaporation-in-gas technique, a mixed vapor of α-terpineol and laurylamine was brought into contact with copper oxide ultrafine particles during growing, the vapor mixture was cooled to collect a liquid containing copper oxide ultrafine particles and then oleic acid amide was added to the collected liquid to thus give a liquid dispersion in which the copper oxide ultrafine particles were individually and uniformly dispersed (copper oxide content: 13 wt%; particle size of copper oxide particles: about 10 nm). In this respect, the laurylamine was added in a rate of 0.08 g per unit gram of the copper oxide ultrafine particles. The resulting liquid dispersion of copper oxide ultrafine particles was concentrated through heating in a vacuum to a particle concentration of 80 wt% to thus give a liquid dispersion having a viscosity, as determined at room temperature, of 45 mPa·s and containing copper oxide particles having a particle size of about 10 nm and individually dispersed in the liquid. In addition, the stability of the copper oxide ultrafine particle-containing liquid dispersion was investigated by an accelerated temperature- raise test and as a result, it was found that the particles were in an individually dispersed state over not less than 2 weeks and that they were stable, when the dispersion was warmed at a temperature of 60 °C.

### (Example 3)

A liquid dispersion was prepared by adding oleylamine and ethyl stearate to copper bis-hexafluoroacetylacetonate and reducing the copper by rapidly heating the resulting mixture to thus form copper ultrafine particles. The oleylamine was added in a rate of 0.1 g per unit gram of the copper ultrafine particles. Almost whole amount of the copper ultrafine particles thus prepared were collected in the individually dispersed state. The particle size of the copper ultrafine particles was found to be about 10 nm. The copper ultrafine particle-containing liquid dispersion was diluted 10 times with acetone to thus extract the ethyl stearate and to precipitate the copper ultrafine particles. The resulting supernatant was removed. These steps of the dilution and the removal of the supernatant were repeated three times to substantially remove the ethyl stearate and to substitute the toluene solvent for the ethyl stearate. As a result, it was found that the resulting copper ultrafine particle-containing liquid dispersion maintained its stable dispersed state even when concentrating it through heating in a vacuum to a concentration of 80 wt%. This dispersion was inspected for the stability according to an accelerated temperature- raise test and as a result, it was found that the particles were in an individually dispersed state over not less than 2 weeks and that they were stable, when the dispersion was warmed at a temperature of 60 °C.

Moreover, copper bis-hexafluoroacetylacetonate and ethyl stearate were rapidly heated to reduce the copper and to thus form copper ultrafine particles and then oleylamine was added to the copper ultrafine particles in a rate of 0.1 g per unit gram of the ultrafine particles to thus collect a liquid dispersion of copper ultrafine particles. The solvent of the resulting liquid dispersion was replaced with toluene using acetone according to the same method used above and as a result, it was found that most of the copper ultrafine particles were individually dispersed in the liquid dispersion thus collected, but a part thereof was collected in the form of aggregates.

### Industrial Applicability

As has been discussed above in detail, the liquid dispersion of metal ultrafine particles according to the present invention comprises at least one member selected from the group consisting of alkylamines, carboxylic acid amides and amino-carboxylic acid salts as a dispersant and therefore, the resulting liquid dispersion is one containing metal ultrafine particles having a particle size of not more than 100 nm, can ensure a desired flow ability even at a high concentration, is free of any aggregation between metal ultrafine particles and can be concentrated to a higher concentration. This liquid dispersion of metal ultrafine particles may suitably be used in, for instance, multilayer distributing wires of, for instance, IC substrates, internal distributing wires of semiconductor devices, interlayer connections of semiconductor modules each having a laminated structure, the formation of transparent conductive films, junctions between metals and ceramics, or color filters, which make use of the colloidal color of the liquid dispersion.

Moreover, the liquid dispersion of metal ultrafine particles in which metal ultrafine particles having a desired particle size are individually or separately dispersed can be prepared by bringing metal vapor into contact with organic solvent vapor, cooling the vapor mixture to collect a liquid containing metal ultrafine particles, adding, to the liquid, at least one member selected from the group consisting of alkylamines, carboxylic acid amides and amino-carboxylic acid salts, thereafter optionally substituting a solvent for forming metal ultrafine particles individually dispersed for the organic solvent present in the foregoing liquid; or by bringing metal vapor into contact with a mixed vapor of an organic solvent and an alkylamine, cooling the vapor mixture to collect a liquid containing metal ultrafine particles and then, if desired, carrying out the foregoing solvent-substitution procedure.

## Claims

1. A liquid dispersion of ultrafine particles of at least one metal, metal alloy or metal oxide comprising at least one member selected from the group consisting of alkylamines, carboxylic acid amides and amino-carboxylic acid salts as a dispersant and said ultrafine particles having a particle size of not more than 100 nm and individually dispersed in a liquid, wherein the ultrafine particles are those prepared at a pressure of not higher than 1.33 kPa (10 Torr) according to the evaporation-in-gas technique or those prepared according to the liquid-phase reduction technique, wherein the content of the dispersant ranges from 0.2 to 7 wt % on the basis of the mass of the ultrafine particles.

2. The liquid dispersion of ultrafine particles as set forth in claim 1, wherein the main chain of the alkylamine has 4 to 20 carbon atoms.

3. The liquid dispersion of ultrafine particles as set forth in any one of claims 1 to 2, wherein the alkylamine is a primary amine.

4. A method for preparing a liquid dispersion of ultrafine particles according to one of claims 1 to 3, the method comprising the steps of:
evaporating a raw metal at a pressure of not higher than 1.33 kPa (10 Torr), according to the evaporation-in-gas technique, in a vacuum in the presence of organic solvent vapor containing at least one organic solvent used for forming said ultrafine particles or in the presence of mixed vapor containing the organic solvent vapor and vapor of at least one member selected from the group consisting of alkylamines, carboxylic acid amides and amino-carboxylic acid salts as a dispersant, to thus bring the organic solvent vapor or the mixed vapor into contact with the raw metal vapor; and then
cooling the vapor mixture to collect a liquid containing said ultrafine particles; and further,
if the raw metal vapor is brought into contact with only the organic solvent vapor, adding at least one member selected from the group consisting of alkylamines, carboxylic acid amides and amino-carboxylic acid salts as a dispersant to the collected liquid, to thus give a desired liquid dispersion in which said ultrafine particles having a particle size of not more than 100 nm are individually or separately dispersed, and the content of the dispersant ranges from 0.2 to 7 wt % on the basis of the mass of the ultrafine particles.

5. The method for preparing a liquid dispersion of ultrafine particles according to claim 4 wherein, when the raw metal vapor is brought into contact with only the organic solvent vapor, the dispersant is added to the liquid containing ultrafine particles collected through cooling, and then a solvent-substitution step is carried out by adding a low molecular weight polar solvent for the removal of the organic solvent to the mixture to thus precipitate the ultrafine particles, removing the resulting supernatant to thus substantially remove the organic solvent and subsequently adding at least one solvent for forming individually dispersed ultrafine particles to the resulting precipitates.

6. The method for preparing a liquid dispersion of ultrafine particles as set forth in claim 4 wherein, when the raw metal vapor is brought into contact with the mixed vapor, a solvent-substitution step is carried out by adding a low molecular weight polar solvent for the removal of the organic solvent to the liquid containing ultrafine particles collected through cooling to thus precipitate the ultrafine particles, removing the supernatant to thus substantially remove the organic solvent and then adding at least one solvent for forming individually dispersed ultrafine particles to the resulting precipitates.

7. The method for preparing a liquid dispersion of ultrafine particles as set forth in any one of claims 4 to 6, wherein the organic solvent for forming ultrafine particles according to the evaporation-in-gas technique is an organic solvent containing at least one alcohol having not less than 5 carbon atoms or an organic solvent containing at least one organic ester.

8. The method for preparing a liquid dispersion of ultrafine particles as set forth in any one of claims 5 to 7, wherein the solvent for forming individually dispersed ultrafine particles is a weakly polar solvent whose main chain has 6 to 18 carbon atoms.

9. The method for preparing a liquid dispersion of ultrafine particles as set forth in any one of claims 4 to 8, wherein after the preparation of the liquid dispersion in which ultrafine particles having a particle size of not more than 100 nm are individually or separately dispersed, the liquid dispersion is concentrated through heating in a vacuum to thus obtain a concentrated liquid dispersion having a high metal ultrafine particle concentration of up to 80 wt%.

10. A method for preparing a liquid dispersion of ultrafine particles of at least one metal, metal alloy or metal oxide comprising the steps of:
adding, to a raw material for reduction containing a metal, a solvent and at least one member selected from the group consisting of alkylamines, carboxylic acid amides and amino-carboxylic acid salts as a dispersant to give a starting material;
decomposing the raw material by heating to form said ultrafine particles having a particle size of not more than 100 nm, in which individual particles are coated with the dispersant; and then
substituting a solvent for forming a liquid dispersion containing the ultrafine particles individually or separately dispersed therein for the solvent used for forming the ultrafine particles, wherein the content of the dispersant ranges from 0.2 to 7 wt% based on the mass of the ultrafine particles.

## Patentansprüche

1. Flüssige Dispersion ultrafeiner Partikel mindestens eines Metalls, einer Metalllegierung oder eines Metalloxids, mindestens ein aus der Gruppe bestehend aus Alkylaminen, Carboxylsäureamiden und Aminocarboxylsäuresalzen ausgewähltes Dispergiermittel enthaltend, wobei die genannten ultrafeinen Partikel eine Partikelgrösse von nicht mehr als 100 nm aufweisen und einzeln in einer Flüssigkeit dispergiert sind, die ultrafeinen Partikel bei einem Druck von nicht mehr als 1,33 kPa (10 Torr) gemäss dem Verdampfung-im-Gas-Verfahren hergestellte oder gemäss dem Flüssigphasen-Reduktionsverfahren hergestellte Partikel sind und der Gehalt an Dispergiermittel zwischen 0,2 und 7 Gew.-% bezogen auf die Masse der ultrafeinen Partikel beträgt.

2. Flüssige Dispersion ultrafeiner Partikel nach Anspruch 1, wobei die Hauptkette des Alkylamins 4 bis 20 Kohlenstoffatome enthält.

3. Flüssige Dispersion ultrafeiner Partikel nach einem der Ansprüche 1 bis 2, wobei das Alkylamin ein primäres Amin ist.

4. Verfahren zur Herstellung einer flüssigen Dispersion ultrafeiner Partikel nach einem der Ansprüche 1 bis 3, wobei das Verfahren folgende Schritte umfasst:
Verdampfen eines Ausgangsmetalls bei einem Druck von nicht mehr als 1,33 kPa (10 Torr) gemäss dem Verdampfung-im-Gas-Verfahren unter Vakuum in der Gegenwart von organischem Lösungsmitteldampf, der mindestens ein zur Bildung der genannten ultrafeinen Partikel verwendetes organisches Lösungsmittel enthält, oder in der Gegenwart von gemischtem Dampf, der den organischen Lösungsmitteldampf und Dampf mindestens eines aus der Gruppe bestehend aus Alkylaminen, Carboxylsäureamiden und Aminocarboxylsäuresalzen ausgewählten Dispergiermittels enthält, um so den organischen Lösungsmitteldampf oder den gemischten Dampf mit dem Dampf des Ausgangsmetalls in Kontakt zu bringen; und nachfolgend
Abkühlen des Dampfgemischs, um eine die genannten ultrafeinen Partikel enthaltende Flüssigkeit zu gewinnen; und weiterhin,
falls der Dampf des Ausgangsmetalls nur mit dem organischen Lösungsmitteldampf in Kontakt gebracht wurde, Zugeben mindestens eines aus der Gruppe bestehend aus Alkylaminen, Carboxylsäureamiden und Aminocarboxylsäuresalzen ausgewählten Dispergiermittels zur gewonnenen Flüssigkeit, um so eine gewünschte flüssige Dispersion zu erhalten, in der die genannten ultrafeinen Partikel mit einer Partikelgrösse von nicht mehr als 100 nm einzeln oder getrennt dispergiert sind und der Gehalt an Dispergiermittel zwischen 0,2 und 7 Gew.-% bezogen auf die Masse der ultrafeinen Partikel beträgt.

5. Verfahren zur Herstellung einer flüssigen Dispersion ultrafeiner Partikel nach Anspruch 4, wobei, wenn der Dampf des Ausgangsmetalls nur mit dem organischen Lösungsmitteldampf in Kontakt gebracht wird, das Dispergiermittel zu der durch Abkühlen gewonnenen, ultrafeine Partikel enthaltenden Flüssigkeit zugegeben wird und dann ein Lösungsmittelsubstitutionsschritt durchgeführt wird, indem ein polares Lösungsmittel mit niedrigem Molekulargewicht für die Entfernung des organischen Lösungsmittels zum Gemisch zugegeben wird, um so die ultrafeinen Partikel auszufällen, der sich ergebende Überstand entfernt wird, um so das organische Lösungsmittel im Wesentlichen zu entfernen, und danach mindestens ein Lösungsmittel für die Bildung einzeln dispergierter ultrafeiner Partikel zu den entstandenen Fällungsprodukten zugegeben wird.

6. Verfahren zur Herstellung einer flüssigen Dispersion ultrafeiner Partikel nach Anspruch 4, wobei, wenn der Dampf des Ausgangsmetalls mit dem gemischten Dampf in Kontakt gebracht wird, ein Lösungsmittelsubstitutionsschritt durchgeführt wird, indem ein polares Lösungsmittel mit niedrigem Molekulargewicht für die Entfernung des organischen Lösungsmittels zu der durch Abkühlen gewonnenen, ultrafeine Partikel enthaltenden Flüssigkeit zugegeben wird, um so die ultrafeinen Partikel auszufällen, der Überstand entfernt wird, um so das organische Lösungsmittel im Wesentlichen zu entfernen, und dann mindestens ein Lösungsmittel für die Bildung einzeln dispergierter ultrafeiner Partikel zu den entstandenen Fällungsprodukten zugegeben wird.

7. Verfahren zur Herstellung einer flüssigen Dispersion ultrafeiner Partikel nach einem der Ansprüche 4 bis 6, wobei das organische Lösungsmittel für die Bildung ultrafeiner Partikel gemäss dem Verdampfung-im-Gas-Verfahren ein organisches Lösungsmittel ist, das mindestens einen Alkohol mit nicht weniger als 5 Kohlenstoffatomen enthält, oder ein organisches Lösungsmittel ist, das mindestens einen organischen Ester enthält.

8. Verfahren zur Herstellung einer flüssigen Dispersion ultrafeiner Partikel nach einem der Ansprüche 5 bis 7, wobei das Lösungsmittel für die Bildung einzeln dispergierter ultrafeiner Partikel ein schwach polares Lösungsmittel ist, dessen Hauptkette 6 bis 18 Kohlenstoffatome enthält.

9. Verfahren zur Herstellung einer flüssigen Dispersion ultrafeiner Partikel nach einem der Ansprüche 4 bis 8, wobei nach der Herstellung der flüssigen Dispersion, in der ultrafeine Partikel mit einer Partikelgrösse von nicht mehr als 100 nm einzeln oder getrennt dispergiert sind, die flüssige Dispersion durch Erhitzen unter Vakuum konzentriert wird, um so eine konzentrierte flüssige Dispersion mit einem hohen Gehalt an ultrafeinen Metallpartikeln von bis zu 80 Gew.-% zu erhalten.

10. Verfahren zur Herstellung einer flüssigen Dispersion ultrafeiner Partikel mindestens eines Metalls, einer Metalllegierung oder eines Metalloxids, folgende Schritte enthaltend:
Zugeben eines Lösungsmittels und mindestens eines aus der Gruppe bestehend aus Alkylaminen, Carboxylsäureamiden und Aminocarboxylsäuresalzen ausgewählten Dispergiermittels zu einem metallhaltigen Rohstoff für die Reduktion, um ein Ausgangsmaterial zu ergeben;
Zersetzen des Rohstoffs durch Erhitzen, um die genannten ultrafeinen Partikel mit einer Partikelgrösse von nicht mehr als 100 nm zu bilden, worin einzelne Partikel mit dem Dispergiermittel überzogen sind; und nachfolgend
Substituieren des zur Bildung der ultrafeinen Partikel verwendeten Lösungsmittels durch ein Lösungsmittel für die Bildung einer flüssigen Dispersion, die die ultrafeinen, einzeln oder getrennt darin dispergierten Partikel enthält, wobei der Gehalt an Dispergiermittel zwischen 0,2 und 7 Gew.-% bezogen auf die Masse der ultrafeinen Partikel beträgt.

## Revendications

1. Dispersion liquide de particules ultrafines d'au moins un métal, alliage métallique ou oxyde métallique, comprenant au moins un membre choisi parmi le groupe comprenant les alkylamines, les amides d'acide carboxylique et les sels d'acides aminocarboxyliques comme dispersant, et lesdites particules ultrafines ayant une dimension de particule ne dépassant pas 100 nm et étant individuellement dispersées dans un liquide, où les particules ultrafines sont celles préparées à une pression ne dépassant pas 1,33 kPa (10 Torr) selon la technique d'évaporation sous gaz ou celles préparées selon la technique de réduction en phase liquide, et où la teneur en dispersant est comprise entre 0,2 et 7 % en poids sur la base de la masse des particules ultrafines.

2. Dispersion liquide de particules ultrafines selon la revendication 1, où la chaîne principale de l'alkylamine comporte 4 à 20 atomes de carbone.

3. Dispersion liquide de particules ultrafines selon l'une quelconque des revendications 1 à 2, où l'alkylamine est une amine primaire.

4. Procédé de préparation d'une dispersion liquide de particules ultrafines selon l'une des revendications 1 à 3, le procédé comprenant les étapes consistant à:
évaporer un métal brut à une pression ne dépassant pas 1,33 kPa (10 Torr), selon la technique d'évaporation sous gaz, sous vide en présence de vapeur de solvant organique contenant au moins un solvant organique utilisé pour former lesdites particules ultrafines ou en présence de vapeur mélangée contenant la vapeur du solvant organique et de vapeur d'au moins un membre choisi parmi le groupe comprenant les alkylamines, les amides d'acide carboxylique et les sels d'acides aminocarboxyliques comme dispersant, afin d'amener ainsi la vapeur du solvant organique ou la vapeur mélangée en contact avec la vapeur du métal brut; et ensuite
refroidir le mélange de vapeurs pour recueillir un liquide contenant lesdites particules ultrafines; et en outre,
si la vapeur du métal brut est amenée en contact avec la vapeur du solvant organique uniquement, ajouter au liquide recueilli au moins un membre choisi parmi le groupe comprenant les alkylamines, les amides d'acide carboxylique et les sels d'acides aminocarboxyliques comme dispersant pour obtenir ainsi une dispersion liquide dans laquelle lesdites particules ultrafines ayant une dimension de particule ne dépassant pas 100 nm sont individuellement ou séparément dispersées, et la teneur en dispersant est comprise entre 0,2 et 7 % en poids sur la base de la masse des particules ultrafines.

5. Procédé de préparation d'une dispersion liquide de particules ultrafines selon la revendication 4 où, lorsque la vapeur du métal brut est amenée en contact avec la vapeur du solvant organique uniquement, le dispersant est ajouté au liquide contenant les particules ultrafines recueilli par refroidissement, et puis une étape de substitution de solvant est effectuée en ajoutant au mélange un solvant polaire à bas poids moléculaire pour l'élimination du solvant organique afin de précipiter ainsi les particules ultrafines, en éliminant le surnageant résultant afin d'éliminer ainsi substantiellement le solvant organique et en ajoutant ensuite aux précipités résultants au moins un solvant pour former des particules ultrafines individuellement dispersées.

6. Procédé de préparation d'une dispersion liquide de particules ultrafines selon la revendication 4 où, lorsque la vapeur du métal brut est amenée en contact avec la vapeur mélangée, une étape de substitution de solvant est effectuée en ajoutant au liquide contenant des particules ultrafines, recueilli par refroidissement, un solvant polaire à bas poids moléculaire pour l'élimination du solvant organique afin de précipiter ainsi les particules ultrafines, en éliminant le surnageant afin d'éliminer ainsi substantiellement le solvant organique et en ajoutant ensuite aux précipités résultants au moins un solvant pour former des particules ultrafines individuellement dispersées.

7. Procédé de préparation d'une dispersion liquide de particules ultrafines selon l'une quelconque des revendications 4 à 6, où le solvant organique pour former des particules ultrafines selon la technique d'évaporation sous gaz est un solvant organique contenant au moins un alcool n'ayant pas moins de 5 atomes de carbone ou un solvant organique contenant au moins un ester organique.

8. Procédé de préparation d'une dispersion liquide de particules ultrafines selon l'une quelconque des revendications 5 à 7, où le solvant pour former des particules ultrafines individuellement dispersées est un solvant faiblement polaire dont la chaîne principale comporte 6 à 18 atomes de carbone.

9. Procédé de préparation d'une dispersion liquide de particules ultrafines selon l'une quelconque des revendications 4 à 8, où après la préparation de la dispersion liquide dans laquelle des particules ultrafines ayant une dimension de particule ne dépassant pas 100 nm sont individuellement ou séparément dispersées, la dispersion liquide est concentrée par chauffage sous vide pour obtenir ainsi une dispersion liquide concentrée ayant une concentration élevée de particules métalliques ultrafines de jusqu'à 80 % en poids.

10. Procédé de préparation d'une dispersion liquide de particules ultrafines d'au moins un métal, alliage métallique ou oxyde métallique, comprenant les étapes consistant à:
ajouter, à une matière première métallifère pour la réduction, un solvant et au moins un membre choisi parmi le groupe comprenant les alkylamines, les amides d'acide carboxylique et les sels d'acides aminocarboxyliques comme dispersant, pour fournir une matière de départ;
décomposer la matière première en la chauffant afin de former lesdites particules ultrafines ayant une dimension de particule ne dépassant pas 100 nm, où des particules individuelles sont revêtues de dispersant; et puis
substituer un solvant pour la formation d'une dispersion liquide contenant les particules ultrafines individuellement ou séparément dispersées dans celle-ci, au solvant utilisé pour former les particules ultrafines, où la teneur en dispersant est comprise entre 0,2 et 7 % en poids sur la base de la masse des particules ultrafines.
